(19) Europäisches Patentamt / European Patent Office / Office européen des brevets

(11) EP 1 894 974 A1

(12) EUROPEAN PATENT APPLICATION

(43) Date of publication:
05.03.2008 Bulletin 2008/10

(51) Int Cl.:
*C08L 53/02* (2006.01)    *C08J 5/18* (2006.01)

(21) Application number: 06119659.8

(22) Date of filing: 28.08.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicants:
• KRATON Polymers Research B.V.
1030 BH  Amsterdam (NL)
• Kraiburg TPE Gmbh
84478 Waldkraiburg (DE)

(72) Inventors:
• De Groot, Hendrik
B-1348, Louvain-la-Neuve (BE)
• Vervoort, Freddy M A
B-1348, Louvain-la-Neuve (BE)
• Vosters, Philippe
B-1348, Louvain-la-Neuve (BE)
• Beitzel, Markus
84478, Waldkraiburg (DE)

(74) Representative: Kortekaas, Marcel C.J.A. et al
Exter Polak & Charlouis B.V.
Postbus 3241
2280 GE Rijswijk (NL)

(54) **Block copolymer compositions for moulded articles**

(57)    The present invention relates to: non-adhesive block copolymer compositions exhibiting a hardness of 30 Shore A - 70 Shore A, and a tensile strength of at least 2.5 MPa, comprising:

(a) 100 parts by weight of a block copolymer, comprising at least two predominantly poly(monovinyl aromatic hydrocarbon) blocks (A) and at least one selectively hydrogenated predominantly poly(conjugated diene) block (B), wherein the monovinyl aromatic hydrocarbon content is in the range of from 10 to 50 wt%, based on the total weight of block copolymer, wherein the vinyl content in the initially prepared poly(conjugated diene) block is in the range of from 30 to 80 mole%, based on the poly(conjugated diene) block, and which block copolymer has an apparent peak molecular weight of from 50 to 150 kg/mol, which block copolymer may optionally be mixed with a diblock copolymer block, which blocks independently satisfy the requirements of the blocks of the block copolymer, in an amount of up to 40 wt%,b) from 5 to 80 parts by weight of a low density poly (ethylene), having a MFR at 190°C/2.16 kg of from 50 to 200 g/10 min.,

c) from 40 to 180 parts by weight of plasticizer, and optionally

d) a filler in an amount of up to 50 parts by weight,
characterized in that the compositions comprising components a) to

c) have a stable Brookfield viscosity of at most 200 Pa.s at 200°C, and
characterized in that the compositions are essentially free of adhesive properties at service temperatures;

to a process for the preparations of moulded articles (films, strips, sheets, laminates, coatings) thereof, and to articles obtained by this process.

**Description**

**Technical Field**

The present invention relates to block copolymer compositions for moulded articles and more in particular to block copolymer compositions showing a combination of a stable low hot-melt viscosity and attractive physical properties of the finally derived products such as hardness, tensile strength etc.

**Background Art**

Block copolymer compositions, comprising:

(a) at least one selectively hydrogenated block copolymer, comprising at least two poly(monovinyl aromatic hydrocarbon) blocks and at least one hydrogenated poly(conjugated diene) block, and more in particular hydrogenated blocks of poly(butadiene, poly(isoprene) or poly(butadiene/isoprene mixtures);
(b) a polyolefin resin; and
(c) a plasticizer or softener,
and to be used for moulded articles by shear moulding, are known from e.g. EP 0409580 A, EP 0413262 A, EP 0733677 A, EP 1498454 A, JP 2004238570 , JP 10053689 , JP 9296093 and US 2004097650 .

However, it is also known from the before mentioned documents and it has also more generally been experienced that -due to the high melt viscosity of such block copolymer compositions at common processing conditions of moulded articles- such moulded articles showing the required properties could only be prepared when using high shear equipment. These articles could not be prepared by using the more simple equipment which is normally used for the processing of hot-melt adhesive compositions, comprising block copolymers, and which use low shear or even zero shear conditions.

More in particular, in EP-0733677 block copolymers containing compositions that are suitable for use in rotational moulding were described. These compositions comprised at least: (a) 100 parts by weight of a block copolymer containing are least two predominantly poly(monovinyl aromatic) blocks and at least one predominantly poly(conjugated diene) block, the poly(conjugated diene) block of which optionally being selectively hydrogenated, (b) from 10 to 160 parts by weight poly(ethylene) or poly(propylene) or copolymers of predominantly ethylene or propylene and minor amounts of other alpha-olefin comonomers, or poly(monovinyl aromatic) polymers, and (c) from 20 to 100 parts by weight of a plasticizer. Suitable block copolymer containing compositions to be successfully applied in the form of particles had an average size in the range of from 200 $\mu$m to 100 $\mu$m (micro granules for rotational moulding). Said block copolymer containing compositions were specified to show a melt viscosity at low shear rate ($\leq$ 0.2 dec$^{-1}$) of a value lower than 2000 Pa.s at 190°C.

However, said compositions were only applied in the form of the hereinbefore specified micro granules instead of in the form of the conventional powders, and were not applied or tested as hot-melt.

Recent testing of the exemplified compositions of said EP-0733677, comprising 100 parts by weight of KRATON® G-1652 block copolymer, 20 parts by weight of linear density polyethylene (LL 6201, Melt Flow Rate of 50), 40 parts by weight of paraffinic oil (CATENEX™ SM 925) and 0.5 parts by weight of antioxidant, revealed that the requited combination of stable properties and use as hot-melt could not be reached.

From EP-0409580 a thermoplastic elastomer composition was known, which comprised 99-1 parts by weight of: (i) a hydrogenated diene polymer, which is a hydrogenation product of a straight or branched chain block copolymer consisting of (C) a polybutadiene block segment having a 1,2-vinyl content of not more than 20 % and (D) a block segment which is a polybutadiene or an alkenyl aromatic hydrocarbon-butadiene copolymer, the butadiene portion of which had a 1,2-vinyl content of 25-95 %, the block structure of said straight or branched chain block copolymer being represented by the formula (C-D)$_m$X in which C means the abovementioned polybutadiene block segment (C), D represented the abovementioned block segment (D), m meant an integer of 2 or more and X represented a coupling residue, at least 90 % of the double bond in the butadiene portion of the straight or branched chain block copolymer having been hydrogenated, or (i') a modified hydrogenated diene polymer in which 0.01 to 10 mole% of at least one functional group selected from the group consisting of carboxyl group, acid anhydride group, hydroxyl group, epoxy group, halogen atom, amino group, isocyanate group, sulfonyl group and sulfonate group is added to the hydrogenated diene polymer (i), and 1-99 parts by weight of (ii) at least one member selected from the group consisting of a thermoplastic resin and a rubbery polymer.

In a preferred embodiment thereof, component (ii) was a rubbery polymer and at least 10 % of the rubbery polymer had been allowed to gel by subjecting a mixture of either component (i) or (i'), with component (ii) and a crosslinking agent for component (ii) to reaction, while applying shear deformation to the mixture.

More preferably component (ii) was a mixture of at least 10 % by weight of the thermoplastic resin and the rubbery polymer, and at least 10 % by weight of a total amount of component (i) and (i') and the rubbery polymer had been allowed to gel by subjecting component (i) or (i') and component (ii) to reaction in the presence of a crosslinking agent while applying shear deformation to them.

From EP-0413262 was known a thermoplastic resin composition which comprised: (I) from 5 to 95 parts by weight of a thermoplastic resin and 95 to 5 parts by weight of a mixture of (II) a tri-block copolymer having a numerical average molecular weight of 100,000 or more and consisting of aromatic vinyl block-conjugated diene block-aromatic vinyl block, wherein the conjugated diene moiety is hydrogenated at a rate of 30 % or more, and of (III) a block copolymer A or B shown in the following formula (1), characterized in that the block copolymer A or B had a numerical average molecular weight in the range of between 10,000 and 45,000 and consisted of aromatic vinyl block and conjugated diene block, wherein the conjugated diene moiety was hydrogenated at a rate of 30 % or more, and the ratio by weight of aromatic vinyl block/conjugated diene block was in the range of 5/95 to 50/50, in which

$$A = (S-D)_n \text{ or } B = (D-S)_n\text{-}D \ (1)$$

wherein S: aromatic vinyl block,
D: conjugated diene block,
N: an integer of 1 to 5
the ratio by weight of tri-block copolymer to block copolymer A or B being in the range of 95/5 to 20/80, with the proviso that the abovementioned thermoplastic resin (I) was not a tackifier resin selected from natural and synthetic resins and was different from the triblock copolymer II and the block copolymer (III). Preferably the triblock copolymer had a weight ratio of aromatic vinyl moiety/conjugated diene moiety in the range of 5/95 to 80/20. The thermoplastic resin could be a polyolefin resin, a poly(styrene) resin, a polyamide type resin, a polycarbonate resin or a polyphenylene type resin.

From EP-1498454 a thermoplastic elastomer composition was known which comprised: $A(B-A)_n$ and/or $(A-B)_n$ (I)
wherein A is a block of a polymer of a vinyl aromatic hydrocarbon; B is a block of an elastomeric polymer; and n is an integer of 1 to 5, and/or
a hydrogenated block copolymer obtained by hydrogenating said block copolymer:

(b) a softening agent for hydrocarbon-based rubbers; and
(c) an olefin-based resin 1,

said component (a) being contained in an amount of 20 to 80 % by weight, and said component (b) being contained in an amount of 20 to 80 % by weight, both based on a total weight of the components (a) and (b), and said component (c) being contained in an amount of 1 to 300 parts by weight based on 100 parts by weight of a total amount of the components (a) and (b). Preferably, the block B in the formula (I) was an elastomeric polymer of a conjugated diene and component (c) was a propylene-based polymer. Moreover, the thermoplastic elastomer composition was at least partially crosslinked. As additional component (d) an ethylene-based or a mixture of ethylene-based and propylene-based resin 2 other than the olefin-based resin component (c), could be applied.

From US-2004/0097650 a thermoplastic elastomer composition was known which comprised the following components (A) and (B), wherein the weight ratio of the component (A)/the component (B) was from 5/95 to 95/5:

(A): a thermoplastic resin, whose melt flow rate measured at 230°C under a load of 2.16 kg according to JIS-K-7210 is 0,001 to 100 g/10 minutes, and whose die swell ratio measured according to JIS-K-7199 is 1.7 to 5.0, and
(B): a hydrogenated vinyl aromatic hydrocarbon-conjugated diene-based copolymer satisfied with all the following conditions (i) to (iii):

(i) a content of a vinyl aromatic hydrocarbon unit is not more than 50 % by weight,
(ii) a ratio of a hydrogenated conjugated diene unit having a side chain of 2 or more carbon atoms contained in the hydrogenated vinyl aromatic hydrocarbon-conjugated diene-based copolymer to a total hydrogenated conjugated diene unit contained therein is not less than 60 %, and
(iii) at least 80 % of a double bond of a conjugated diene unit contained in the hydrogenated vinyl aromatic hydrocarbon-conjugated diene-based copolymer is hydrogenated. Preferably the component (A) comprised a poly(propylene)-based resin.

It will be appreciated that there has developed a strong need for the manufacture of moulded articles by using conventional spray or hot-melt equipment characterized by zero shear conditions and processing temperatures in the range of from 180 to 270°C.

It will be appreciated that the desired application of conventional spray or hot-melt equipment which do not apply substantial shear, requires that the elastomeric material to be used shows a Brookfield viscosity of 200 Pa.s or less at processing temperature (i.e. the temperature applied being around 200°C). Said elastomeric material must be processable by casting, coating or spraying. Because the residence time of the elastomeric material in such type of equipment can be very long (more than several hours), the second requirement is that the Brookfield viscosity of said composition at 200°C remains stable for at least 24 hours.

The requirements for the mechanical properties of the resulting final moulded elastomeric part (e.g. strip, coating, film) are:

Hardness: 30 - 70 Shore A; preferably 40-60 Shore A
Tensile strength: > 2.5 MPa; preferably 2.5-6 MPa
Elongation: > 400 %; preferably 400-1000 %
Compression Set: < 40 % (23°C/24 h.) preferably 20-40 %.

As a result of extensive research and experimentation such elastomeric materials aimed at have now surprisingly been found.

**Disclosure of Invention**

Accordingly the present invention relates to non-adhesive block copolymer compositions exhibiting a hardness of 30 Shore A - 70 Shore A, and a tensile strength of at least 2.5 MPa (ISO-37), comprising:

(a) 100 parts by weight of a block copolymer, comprising at least two predominantly poly(monovinyl aromatic hydrocarbon) blocks (A) and at least one selectively hydrogenated predominantly poly(conjugated diene) block (B), wherein the monovinyl aromatic hydrocarbon content is in the range of from 10 to 50 wt%, based on the total weight of block copolymer, wherein the vinyl content in the initially prepared poly(conjugated diene) block is in the range of from 30 to 80 mole%, based on the poly(conjugated diene) block, and which block copolymer has an apparent peak molecular weight of from 50 to 150 kg/mol, which block copolymer may optionally be mixed with a diblock copolymer block, which blocks independently satisfy the requirements of the blocks of the block copolymer, in an amount of up to 40 wt%,
b) from 30 to 60 parts by weight of a low density poly(ethylene), having a MFR at 190°C/2.16 kg of from 50 to 200 g/10 min., and preferably from 60 to 175 g/10 min. (ASTM D1238),
c) from 50 to 150 parts by weight of plasticizer and preferably a paraffinic processing oil, and optionally
d) a filler in an amount of up to 50 parts by weight,
characterized in that the compositions comprising components a) to
c) have a stable Brookfield viscosity of at most 200 Pa.s at 200°C (ASTM D3236), and characterized in that the compositions are essentially free of adhesive properties at service temperatures; and to a process for the preparations of moulded articles (films, strips, sheets, laminates, coatings) thereof and to articles from them.

**Mode(s) for Carrying Out the Invention**

With the term "service temperature" as used throughout the present specification is meant a temperature in the range of from -10 to 40°C.

By the term "apparent molecular weight" is meant the molecular weight determined by Liquid High Performance Permeation Size Exclusion Chromatography (LHPSEC) using the method according to ASTM D-5296-97, and is expressed in terms of polystyrene standard polymers.

By the term "predominantly", as used in "predominantly monovinyl aromatic hydrocarbon" or "predominantly poly(conjugated diene)" is meant that the main monomer can be mixed with small amounts of structurally unrelated comonomers, provided the behaviour of the polymer block does not change. For instance, the A blocks may comprise up to 5 wt% of conjugated diene monomers, whereas the B block(s) may comprise even more (up to 50 wt%, but preferably up to 5 wt%) of the monovinyl aromatic hydrocarbon, provided the B block(s) remain(s) an elastomeric polymer block.

By the term "stable Brookfield viscosity of at most 200 Pa.s at 200°C" is meant that the viscosity at 200°C does not change with more than 10 % from its initial value for at least 22 hours, and preferably not more than 5 %. The method by which this viscosity may be determined is ASTM D3236.

The non-adhesive block copolymer compositions according to the present invention must be essentially free of adhesive properties at service temperature. This means that the compositions should not feel tacky to touch. Tackiness may for instance be analyzed by the common Rolling Ball Tack test method, based on ASTM D3121-73. Non-adhesive or free of adhesive properties means that in this test method a rolling ball will roll (much) further than 30 cm on top of a film on which the composition has been applied. In general this means that little (less than 5 parts by weight) or no tackifying resin may be present. Preferably, no tackifying resin is present at all.

It will be appreciated by a person skilled in the art that in typical hot melt coating equipment (for instance: Meltex coater) the residence time of the hot melt composition in the storage container can be several hours. In case of a stop and restart (cooling and re-heating), the Brookfield viscosity should remain stable to ensure constant processing characteristics.

The upper limit for temperature and Brookfield viscosity are set by the choice of equipment. Usual industry standards for hot melt coaters refer to 200°C and 200 Pa.s but these values may vary to lower and higher values depending on specific equipment.

<u>Component a)</u>

The component a) is preferably selected from block copolymers that comprise at least two end blocks A, made of polymerized monovinyl aromatic hydrocarbon, thus giving a glossy (resinous) monovinyl aromatic segment, and at least one central block B composed of polymerized conjugated diene and preferably of poly(butadiene), which provides an amorphous elastomeric segment. The polymer can be linear, represented by the general formula A-B-A, or radial as represented by the general formula (A-B)qX, or mixtures thereof. Linear (and radial) block copolymers may also comprise a multitude of alternating A and B blocks.

The A-B-A triblock copolymer can be made by either sequential polymerisation or by coupling of an initially prepared living block copolymer A-B.

In the sequential polymerisation the monovinyl aromatic monomer is polymerized in a first step to form a monovinyl aromatic hydrocarbon block, followed by the addition of a batch of conjugated diene and completion of the polymerisation to form a block copolymer A-B-Z, wherein Z is an active anionic polymerisation site, such as $Li^+$, where after a batch of monovinyl aromatic hydrocarbon monomer is added and the polymerisation is continued until completion. The living block copolymer obtained is terminated by addition of a proton donating agent and preferably water or an alcohol, more preferably methanol. The sequential polymerisation process for the manufacture of A-B-A block copolymers has in general been disclosed in e.g. US-3,231,635, which is included herein by reference.

The A- B-A block copolymers and $(A-B)_nX$ block copolymers can be manufactured by coupling of an initially prepared living block copolymer A-B-Z with a coupling agent. The manufacture of coupled A- B-A block copolymers of $(A-B)_nX$ block copolymers has broadly been disclosed in US-5,194,530 which is included herein by reference.

The monovinyl aromatic hydrocarbon monomer can contain from 8 to 30 carbon atoms and can consist of a single monomer or of mixtures thereof. Preferred monomers are styrene and substituted styrenes such as o-methylstyrene, p-methylstyrene, dimethylstyrene, $\alpha$-methylstyrene, diphenyl ethylenes, and the like, but styrene is the most preferred monomer.

The conjugated diene can have from 4 to 8 carbon atoms and can consist of a single monomer or of mixtures thereof. Preferred monomers are 1,3-butadiene or isoprene or mixtures thereof.

In general, the polymers useful in this invention may be prepared by contacting the monomer or monomers with an organoalkali metal compound in a suitable solvent at a temperature within the range from 0°C to 100°C. Particularly effective polymerisation initiators are organolithium compounds having the general formula RLi wherein R is an aliphatic, cycloaliphatic, alkyl-substituted aromatic hydrocarbon radical having from 1 to 20 carbon atoms of which sec.butyl is preferred.

Suitable solvents include those useful in the solution polymerisation of the polymer of the present invention and include aliphatic, cycloaliphatic, alkyl-substituted cycloaliphatic, aromatic and alkyl-aromatic hydrocarbons. Suitable solvents include butane, straight or in branched pentane, hexane and heptane, cycloaliphatic hydrocarbons such as cyclopentane, cyclohexane and cyclopentane, alkyl-substituted aromatic hydrocarbons such as toluene and xylene.

It will be appreciated that during the polymerisation of the conjugated diene monomer(s), such as butadiene, they can be incorporated in the growing polymer chain in two ways. E.g. butadiene can be inserted in the 1,4-addition form or in the 1,2-addition form, the latter of which will result in the formation of vinyl groups attached to the backbone polymer chain. It is well known in the art to regulate the polymerisation toward the 1,2-addition. Broadly this can be regulated by the use of an ether or amine as known from e.g. US-3,686,366; US-3,700,748 and US-5,194,535, which are included herein by reference. Preferably the vinyl content is in the range of from 35 to 50 mole%.

As mentioned hereinbefore, the polymers useful in this invention may be prepared using a coupling agent. Suitable coupling agents include tin coupling agents, halogenated silicon coupling agents, alkoxysilanes and alkylalkoxysilanes, epoxy compounds such as the diglycidyl ether of bisphenol A or F, benzoic esters, halogenated alkanes and divinylbenzene, $CO_2$ and similar multifunctional compounds.

It will be appreciated that, depending on the coupling efficiency of the applied coupling agent, a certain amount of non-coupled terminated diblock copolymer will be present in the finally obtained block copolymer.

Preferably at least 80 wt% of the total block copolymer and more in particular from 90 to 100 wt% will be formed by the coupled triblock or radial main block copolymer (i.e. a diblock content of from 0 to 20 wt%). More preferably the diblock contents are from 0 to 5 wt%.

The thermoplastic elastomers according to the present invention are selectively hydrogenated in the sense that the aliphatic unsaturation of the B block(s) is significantly removed whereas leaving unaffected most of the aromatic unsaturation in the A blocks. Said aliphatic unsaturation can be partially or almost completely hydrogenated. Hydrogenation processes are known from US-3,113,986; US 3,634,549; US-3,670,054; US 3,700,633; US-4,226,952; US-Re-27,145 and US-5,039,755, which are included herein by reference.

The apparent molecular weight of the block copolymers according to the present invention will generally be at least 50 kg/mole. For linear A- B-A block copolymers the apparent molecular weight will generally be within the range of from 50 to 150 kg/mole. It will be appreciated by a person skilled in the art that the upper limit is dictated by viscosity considerations and can be as high as acceptable for a good processability. The preferred molecular weight for linear A-B-A polymers is from 60 to 100 kg/mole, more preferably in the range of from 70 to 90 kg/mole and most preferably from 70 to 80 kg/mole. With radial polymers the molecular weight can be much higher since these polymers have a lower viscosity for a given total molecular weight. Thus, for radial polymers the molecular weight generally will be in the range from 50 to 150 kg/mole, preferably from 60 to 150 kg/mole.

The total monovinyl aromatic content of the block copolymer (e.g., blocks A) is generally within the range of from 10 to 50 weight percent, preferably from 20 to 35 weight percent.

Block copolymers that may be used as component a) in the present composition are commercially available. KRATON supplies the grades KRATON® G1652, G1650 and G1657 that will all be suitable. Kuraray provides the SEPTON™ grades 2007; 4033; 8004; 8007 and 2003. Asahi provides the grades Tuftec™ 1041; 1065 and 1052. Dynasol provides the grades Calprene™ H 6110; 6120 and 6215. Obviously, also a combination of block copolymer grades may be used, provided that the requirements of component a) are met.

<u>Component b)</u>

According to a preferred embodiment of the compositions according to the present invention the component b) occurs in a proportion of from 5 to 60 parts by weight, more preferably from 10 to 50 parts by weight, most preferably from 20 to 40 parts by weight per 100 parts by weight of block copolymer. Although it is common to use a polyolefin in block copolymer compositions, the present invention is rather specific in that the polyolefin to be used is a low density poly(ethylene), moreover having a melt flow rate at 190°C/2.16 kg of from 50 to 200 g/10 min., preferably from 70 to 170 g/10 min.

Suitable LDPE grades include LD655 and LD654 available from Exxon-Mobil. Note in this regard that most linear low density polyethylenes have a MFR that is significantly less than 50 g/10 min. Such grades are not suitable for use in line with the present invention.

<u>Component c)</u>

According to preferred embodiment of the compositions according to the present invention the component c) occurs in a proportion of from 45 to 160 parts by weight, more preferably in a proportion of from 80 to 130 parts by weight of block copolymer.

Component c) can be selected from anyone or more of the plasticizers conventionally used in block copolymer compositions. Paraffinic processing oils are suitable used in compositions described in the prior art.

<u>Component d)</u>

Fillers, which expression includes other inert polymers, are used generally because they are cheap, not for their properties. In more preferred compositions component d) is absent. In addition, there are other components generally added, such as antioxidants, processing aids and colouring agents and the like. However the amount thereof is generally very small. Typical amounts vary and may be up to e.g., 20 parts by weight for colouring agents.

It will be appreciated that the present invention also related to a process for the preparation of moulded articles, comprising processing the hereinbefore specified block copolymer compositions, e.g., in the form of pellets, blocks or other intermediate forms, under zero shear conditions and at a temperature in the range of from 150 to 250°C and preferably from 170 to 200°C.

More in particular the present invention relates to a process for the manufacture of sheets, films, laminates, composites or strips, comprising melt coating or spraying a hereinbefore specified composition under zero shear conditions and at a temperature in the range of from 150 to 200°C. Said process forms another aspect of the present invention.

Another aspect of the present invention will be formed by the moulded articles obtained by the hereinbefore specified processes and more in particular sheets, films or strips.

<u>Use of the composition</u>

The block copolymer compositions of the present invention can be processed in an economically attractive way by using rather simple and widely available processing equipment in which no or only little shear is applied to the composition.

The present invention will hereinafter be described more specifically by the following examples and comparative examples, however without restriction of its scope to these specific embodiments.

**Preparation of block copolymer compositions**

All compositions described in experiments have been produced on a co-rotating twin screw extruder (Werner & Pfleiderer) ZSK25 with screw diameter 25 mm and L/D = 49, equipped with single feed port and 3 high shear mixing zones.

The components were preblended in the following order: Oil is added within 5 minutes to the SEBS block copolymer turning in a high speed preblender, followed by the addition of the other ingredients (polyolefin and stabilisers). This preblend is used as feed for the extruder. Trials were carried out at feed-rate of 10 kg/hour.

Temperature profile for compositions containing PE is given (values for composition containing PP is given between brackets.

Feed zone: 110°C (150°C)

Mixing zones: 180°C (200°C)

Die: 120°C (160°C)

Screw speed was set at 300 rpm.

Extruder was equipped with strand die (2 holes of 3 mm), water bath and cutter.

Apparent (Brookfield) viscosity was measured on composition pellets at 200°C with Brookfield DV-II viscometer (RVT type, spindle 28) according to ASTM D3236.

Composition pellets were further processed in an injection moulding machine to produce plates of 90x90x2mm. Dumbbells (type 2) were cut from these plates to test the tensile properties according to ISO-37.

Plates of 90x90x6 mm were prepared for hardness testing according to ISO-868 and for the preparation of cylindrical samples for compression set ("CS") testing according to ISO-815.

Hot melt equipment has been used that produces strips through a die of dimensions 20 x 1 mm under almost zero-shear conditions. But via this method only representative samples for testing for the compositions with a Brookfield viscosity <200Pa.s can be produced. As a complete comparison of composition properties is desired, it has been chosen to test the material properties on injection moulded samples.

**Table 1, Materials used**

| G1652 | SEBS, KRATON®, ex KRATON Polymers |
|---|---|
| G1650 | SEBS ex KRATON Polymers |
| P352 | Paraffinic white oil, PRIMOL™, ex Exxon-Mobil |
| I1010 | Phenolic stabilizer, IRGANOX™, ex Ciba |
| LD655 | LDPE ex Exxon-Mobil with MFR = 150 g/10min at 190°C/2.16 kg |
| LD654 | LDPE ex Exxon-Mobil with MFR = 70 g/10min at 190°C/2.16 kg |
| MA923 0 | LDPE ex Borealis with MFR = 22 g/10min at 190°C/2.16 kg |
| HK508F L | homo-PP, BORFLOW™, ex Borealis with MFR = 800g/10min at 230°C/2.16kg |
| F115 | Aromatic hydrocarbon resin, KRISTALEX™, ex Eastman |

**EXAMPLES 1-3. COMPARATIVE EXAMPLES 1-8**

For these experiments we aimed at hardness between 40 and 50 Shore A.

**Table 2**

| Example | Comp. 1 | 1 | 2 | Comp. 2 |
|---|---|---|---|---|
| G1652 | 100 | 100 | 100 | 100 |
| P352 | 75 | 100 | 125 | 150 |
| LD655 | 30 | 40 | 50 | 60 |
| I1010 | 0.2 | 0.2 | 0.2 | 0.2 |
| Brookfield Viscosity at 200°C (Pa.s) | 251 | 83 | 30 | 15 |
| Ibid, after 24hr (Pa.s) | 247 | 82 | 29 | 15 |
| Hardness (Sh A) | 45 | 44 | 41 | 40 |

(continued)

| Example | Comp. 1 | 1 | 2 | Comp. 2 |
|---|---|---|---|---|
| Tensile (MPa) | 4.7 | 3.5 | 2.6 | 2.0 |
| Elongation (%) | 650 | 600 | 550 | 500 |
| CS at 23°C (%) | 25 | 27 | 27 | 28 |

**Comparative example 1** failed because Brookfield viscosity at 200°C was too high (above 200 Pa.s). This composition can not be processed under zero-shear conditions. **Example 1** demonstrated that the combination of properties can be achieved. **Example 2** demonstrated that the combination of properties can also be achieved with a different balance of Kraton G1652, oil and PE. **Comparative example 2** failed in tensile properties. This composition falls outside the claims of this invention.

**Table 3**

| Example | 1 | Comp. 3 | Comp. 4 |
|---|---|---|---|
| G1652 | 100 | 100 | 100 |
| P352 | 100 | 100 | 100 |
| LD655 | 40 | - | - |
| HK508FL | - | 40 | - |
| F115 | - | - | 40 |
| I1010 | 0.2 | 0.2 | 0.2 |
| Brookfield Viscosity at 200°C (Pa.s) | 83 | 155 | 40 |
| Ibid, after 24hr (Pa.s) | 82 | 65 | 39 |
| Hardness (Sh A) | 44 | 53 | 42 |
| Tensile (MPa) | 3.5 | 3.0 | 3.0 |
| Elongation (%) | 600 | 550 | 500 |
| CS at 23°C (%) | 27 | 35 | 60 |

In **comparative experiment 3**, the high MFR PE was replaced by a high flow PP. This high flow PP (so-called controlled rheology grades) does not result in stable Brookfield viscosity for the composition. This composition failed to meet the requirements. In **comparative experiment 4** the PE has been replaced by Kristalex F115, a low MW styrenic resin, widely used in the adhesive and hot-melt industry to improve flow and hardness. However, this composition did not meet the compression set requirement. Furthermore, these styrenic resins have a significant higher price than polyethylenes.

**Table 4**

| Example | 1 | Comp. 5 | Comp. 6 | Comp. 7 |
|---|---|---|---|---|
| G1652 | 100 | - | - | - |
| G1650 | - | 100 | 100 | 100 |
| P352 | 100 | 100 | 150 | 175 |
| LD655 | 40 | 40 | 60 | 70 |
| I1010 | 0.2 | 0.2 | 0.2 | 0.2 |
| Brookfield Viscosity at 200°C (Pa.s) | 83 | n.m. | n.m. | n.m. |
| Hardness (Sh A) | 44 | 45 | 42 | 40 |

(continued)

| Example | 1 | Comp. 5 | Comp. 6 | Comp. 7 |
|---|---|---|---|---|
| Tensile (MPa) | 3.5 | 4.0 | 3.0 | 2.5 |
| Elongation (%) | 600 | 550 | 600 | 650 |
| CS at 23°C (%) | 27 | 23 | 27 | 30 |

n.m. The Viscosity could not be measured as the compositions did not melt at 200°C.

**Example 1**, again, represents a composition according to the present invention. On the other hand, **Comparative examples 5-7** demonstrated that the specific requirements needed for hot melt processing could not be met with compositions outside the scope of the invention.

**Table 5**

| Example | 1 | 3 | Comp.8 |
|---|---|---|---|
| G1652 | 100 | 100 | 100 |
| P352 | 100 | 100 | 100 |
| LD655 | 40 | - | - |
| LD654 | - | 40 | - |
| MA9230 | - | - | 40 |
| I1010 | 0.2 | 0.2 | 0.2 |
| Brookfield Viscosity at 200°C (Pa.s) | 83 | 152 | 308 |
| Hardness (Sh A) | 44 | 47 | 51 |
| Tensile (MPa) | 3.5 | 4.0 | 4.0 |
| Elongation (%) | 600 | 600 | 600 |
| CS at 23°C (%) | 27 | 25 | 23 |

The compositions of **examples 1 and 3** are according to the invention and exhibit the desired properties. On the other hand, **comparative example 8** (based on a low density poly(ethylene) having a MFR of less than 50 g/10 min., failed as the Brookfield viscosity at 200°C was above 200 Pa.s. The composition is therefore not processable under zero-shear conditions as required for hot melt equipment.

**Claims**

1.　Non-adhesive block copolymer compositions exhibiting a hardness of 30 Shore A - 70 Shore A and a tensile strength of at least 2.5 MPa (ISO-37) comprising: a) 100 parts by weight of a multiblock copolymer comprising at least two predominantly poly(monovinyl aromatic hydrocarbon) blocks (A) and at least one selectively hydrogenated predominantly poly(conjugated diene) (B) block, wherein the monovinyl aromatic hydrocarbon content is in the range of from 10 to 50 wt%, based on the total weight of block copolymer, wherein the vinyl content in the initially prepared poly(conjugated diene) block is in the range of from 30 to 80 %, and which block copolymer has an peak average molecular weight of from 50 to 150 kg/mole, which block copolymer optionally may be mixed with a diblock copolymer having one poly(monovinyl aromatic hydrocarbon) block and one poly(conjugated diene) block , in an amount of up to 40 wt%,b) from 5 to 80 parts by weight of a low density poly(ethylene), having a MFR at 190°C/2.16 kg of from 50 to 200 g/10 min., and preferably from 60 to 175 g/10 min. (ASTM D1238),c) from 40 to 180 parts by weight of plasticizer and preferably a paraffinic processing oil, and optionallyd) a filler in an amount of up to 80 parts by weight, **characterized in that** the compositions comprising components a) to c) have a stable Brookfield viscosity of at most 200 Pa.s at 200°C (ASTM D3236), **characterized in that** the compositions are essentially free of adhesive properties at service temperature.

2.　Block copolymer compositions according to claim 1, wherein the block copolymer component a) comprises a selectively hydrogenated predominantly poly(butadiene) block wherein the vinyl content is in the range of from 35 to 50 mole%.

3. Block copolymer compositions according to claims 1 and 2, wherein the block copolymer component a) has a poly (monovinyl aromatic) content of from 25 to 35 %.

4. Block copolymer compositions according to claims 1 and 2, wherein the block copolymer component a) has an apparent peak molecular weight of from 60 to 100 kg/mole.

5. Block copolymer compositions according to claims 1 and 2, wherein the block copolymer component a) comprises a diblock copolymer in a content of from 0 to 10 wt% and preferably from 0 to 5 wt%.

6. Block copolymer compositions according to claims 1-5, wherein component b) occurs in a proportion of from 5 to 60 parts by weight per 100 parts by weight of block copolymer and wherein component (c) occurs in amount of from 80 to 130 parts by weight per 100 parts by weight of block copolymer.

7. Block copolymer compositions according to claims 1-6, wherein component d) is absent.

8. Process for the preparation of moulded articles comprising processing the compositions according to claims 1-8 under zero shear conditions and a temperature of from 150 to 250°C.

9. Process for the manufacture of sheets, films or strips, comprising melt coating or spraying a composition according to claims 1-8, under zero shear conditions at a temperature of from 170 to 200°C.

10. Moulded articles obtained by the process of claims 8 and 9.

## EUROPEAN SEARCH REPORT

**European Patent Office**

Application Number

EP 06 11 9659

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 733 677 A1 (SHELL INT RESEARCH [NL] KRATON POLYMERS RES BV [NL]) 25 September 1996 (1996-09-25) * page 3, line 20 - line 30 * * page 3, line 54 - line 55 * * page 4, line 16 - line 21 * * page 4, line 30 - line 35; claims; example 1; table 4 * | 1-10 | INV. C08L53/02 C08J5/18 |
| A,D | EP 0 413 262 A2 (KURARAY CO [JP]) 20 February 1991 (1991-02-20) * the whole document * | 1-10 | |
| A,D | US 2004/097650 A1 (OGAWA ATSUKO [US] ET AL) 20 May 2004 (2004-05-20) * the whole document * | 1-10 | |
| A | JP 2003 012886 A (JSR CORP) 15 January 2003 (2003-01-15) * abstract * | 1-10 | |
| | | | TECHNICAL FIELDS SEARCHED (IPC) C08L C08J |

The present search report has been drawn up for all claims

| Place of search | Date of completion of the search | Examiner |
|---|---|---|
| Munich | 31 January 2007 | IRAEGUI RETOLAZA, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 9659

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2007

| Patent document cited in search report | | Publication date | Patent family member(s) | | Publication date |
|---|---|---|---|---|---|
| EP 0733677 | A1 | 25-09-1996 | US | 5726239 A | 10-03-1998 |
| EP 0413262 | A2 | 20-02-1991 | DE | 69025006 D1 | 07-03-1996 |
| | | | DE | 69025006 T2 | 19-09-1996 |
| | | | JP | 2779001 B2 | 23-07-1998 |
| | | | JP | 3076744 A | 02-04-1991 |
| US 2004097650 | A1 | 20-05-2004 | CN | 1501961 A | 02-06-2004 |
| | | | DE | 10295697 T0 | 20-11-2003 |
| | | | WO | 02081570 A1 | 17-10-2002 |
| JP 2003012886 | A | 15-01-2003 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0409580 A
- EP 0413262 A
- EP 0733677 A
- EP 1498454 A
- JP 2004238570 B
- JP 10053689 B
- JP 9296093 B
- US 2004097650 A
- US 20040097650 A
- US 3231635 A
- US 5194530 A

- US 3686366 A
- US 3700748 A
- US 5194535 A
- US 3113986 A
- US 3634549 A
- US 3670054 A
- US 3700633 A
- US 4226952 A
- US RE27145 E
- US 5039755 A